# EUROPÄISCHE PATENTANMELDUNG

(11) **EP 3 712 754 A1**
(43) Veröffentlichungstag der Anmeldung: **23.09.2020**
(21) Anmeldenummer: 20162400.4
(22) Anmeldetag: 11.03.2020
(51) Int. Cl.: G06F 3/044, H01L 51/00

(54) **TRANSPARENTE GEDRUCKTE FOLIE DURCH VUV-STRAHLUNG**

(30) Priorität: 22.03.2019 DE 102019107423
(71) Anmelder: PAS Deutschland GmbH, 16816 Neuruppin (DE)
(72) Erfinder: Ehrlich, Ralf, 16816 Neuruppin (DE); Gerhardt, Thomas, 16816 Neuruppin (DE); Scenev, Vitalij, 16816 Neuruppin (DE)
(74) Vertreter: Witte, Weller & Partner Patentanwälte mbB

(57) **Zusammenfassung**

Ein Verfahren zur Herstellung einer Sensorvorrichtung (10) sowie die entsprechende Sensorvorrichtung werden bereitgestellt. Das Verfahren weist auf oder besteht aus Bereitstellen eines Trägers (12) aus einem optisch transmissiven Material, Aufbringen einer ersten Schicht (14) aus einem elektrisch leitenden Polymer auf den Träger, Bestrahlen der ersten Schicht (14) mit VUV-Strahlung unter Ausbilden mindestens eines elektrisch nicht leitenden Funktionsbereichs (16) und mindestens eines elektrisch leitenden Funktionsbereichs (18), wobei die erste Schicht während dem Bestrahlen mindestens zeitweise gekühlt wird.

## Beschreibung

Die vorliegende Erfindung betrifft eine Sensorvorrichtung, bspw. eine Sensorfolie oder eine Touch-Folie, und ein Verfahren zu deren Herstellung. Die Sensorvorrichtung weist eine auf einem Träger aufgebrachte erste Schicht mit mindestens einem elektrisch nicht leitenden Funktionsbereich und mindestens einem elektrisch leitenden Funktionsbereich auf, wobei sich die optische Transmissivität des elektrisch nicht leitenden Funktionsbereichs und die optische Transmissivität des elektrisch leitenden Funktionsbereichs ungefähr entsprechen.

Berührungsempfindliche Sensorvorrichtungen, auch Touchscreens genannt, werden immer häufiger in vielfältigen Bereichen eingesetzt, wie zum Beispiel als Bedienpanel zur Steuerung von Haushaltsgeräten, Maschinen und Anlagen, bei Elektrokleingeräten wie Computern, Telefonen und ähnlichem. Im Gegensatz zu mechanischen Druckschaltern sind berührungsempfindliche Sensorvorrichtungen weniger abnutzungsanfällig, leicht zu reinigen und werden von Benutzern als ästhetisch ansprechend empfunden. Insbesondere in den letzten Jahren wurden zunehmend Sensorvorrichtungen der "Projected Capacitive Touch"(PCT)-Technologie eingesetzt, bei der die Touch-Erkennung durch eine Schutzscheibe vor einem Display ermöglicht wird. Solche PCT-Touchscreens können wetterbeständig ausgebildet sein, wodurch sie insbesondere auch im Außenbereich eingesetzt werden können.

Da auch bei Sensorvorrichtungen der Trend zur Verwendung von hochauflösenden Fullcolor-Displays als Bedienungselement zu erkennen ist, muss die Sensorvorrichtung optisch homogen transmissiv sein, d.h. keine für das menschliche Auge sichtbare Strukturen/Strukturierungen aufweisen, damit die am davor angebrachten Display erscheinende Informationen nicht optisch gestört werden. Insbesondere auch im Bereich der Haushaltsware oder Automotive ist die Tendenz zur Anwendung von kapazitiven Touch-Screens zu erkennen.

Für eine Touch-Bedienung sind elektrisch leitfähige Strukturen erforderlich, die bei Berührung einer Oberfläche oder bei Annäherung durch eine geeignete Auswerteelektronik die entsprechenden Funktionen ausgeben. Gerade im Bereich der gedruckten Elektronik finden immer mehr elektrisch leitfähige Polymere verstärkt Anwendung.

Ein Beispiel eines derartigen elektrisch leitfähigen Polymers ist Poly-3,4-ethylendioxythiophen (PEDOT). Exemplarische PEDOT-Varianten sind PEDOT:PSS und PEDOT:TOS. PSS steht hierbei für den Polyelektrolyt Polystyrolsulfonat, bspw. Natriumpolystyrolsulfonat, das unter anderem für die Dotierung des PEDOTs herangezogen wird. TOS steht für Tosylat, das ebenso zur Dotierung des PEDOTs verwendet wird.

Strukturierte Elektroden aus einem elektrisch leitfähigen Polymer, bspw. PEDOT-Elektroden, lassen sich beispielsweise mittels Siebdruckverfahren realisieren. Ein Nachteil dabei ist, dass der erhaltene Touch-Screen optisch nicht homogen transparent erscheint, da die Bereiche mit und ohne leitfähige Strukturen verschiedene optische Transmissivität aufweisen.

Beispielhafte PEDOT-Anwendungen können der EP 3 132 452 A1 entnommen werden, die eine elektrisch leitende PEDOT-Sol-Gel-Beschichtung offenbart. Ein Verfahren zur Synthese eines PEDOT-(Co)-Polymerelektrolyts ist in der EP 306 32 48 A1 beschrieben.

Weiterhin können Sensorvorrichtungen mit dem Clevios-Etch-Verfahren (Heraeus Deutschland GmbH & Co. KG) erzeugt werden. Das zugrundeliegende Verfahren ist wegen einer Vielzahl verschiedener Verfahrensschritte und in den Verfahrensschritten zugrundeliegenden verschiedenen Bedingungen, insbesondere der eingesetzten Nasschemie, kompliziert und störanfällig.

Eine Aufgabe der vorliegenden Erfindung besteht daher in der Bereitstellung einer Sensorvorrichtungen und eines Verfahrens zur Erzeugung derselben, wobei die Sensorvorrichtung elektrisch leitende und nicht leitende Funktionsbereiche aufweist, deren Unterschied in der optischen Transmissivität, vor allem mit dem bloßen menschlichen Auge, nicht wahrnehmbar ist. Weiterhin ist es wünschenswert großflächig gedruckte Sensorvorrichtungen, bspw. aus PEDOT, und ein Verfahren zu deren Herstellung bereitzustellen.

Eine weitere Aufgabe besteht darin eine Sensorvorrichtungen und ein Verfahren zur Erzeugung derselben bereitzustellen, wobei die Sensorvorrichtung eine möglichst hohe Auflösung der elektrisch leitenden und elektrisch nicht leitenden Funktionsbereiche aufweist, so dass eine möglichst hohe Dichte einzelner Sensorfelder auf einer Sensorvorrichtung ermöglicht wird.

Noch eine weitere Aufgabe besteht darin ein Verfahren bereitstellen mit dem eine derartige Sensorvorrichtung einfach, schnell und zuverlässig erzeugt werden kann. Das Verfahren sollte auch bei kleinen und mittleren Stückzahlen ökonomisch einsetzbar sein, insbesondere sollte die Fertigung von Prototypen, Sonderprodukten oder Ersatzteilen mit Losgröße 1 ermöglicht werden. Das Verfahren sollte ferner möglichst ungefährlich und umweltschonend durchführbar sein, so sollte die Verwendung von problematischen Stoffen, bspw. Säuren oder toxischer Stoffe, und die Erzeugung problematischer Abfallstoffe, bspw. toxische Stoffe, vermieden werden. Eine weitere Aufgabe besteht in der Bereitstellung einer 3D geformten Sensorvorrichtung, in der die gedruckte Elektronik verformbar ist.

Diese Aufgaben werden gemäß einem ersten Aspekt gelöst durch ein Verfahren zur Herstellung einer Sensorvorrichtung, aufweisend oder bestehend aus
- Bereitstellen eines Trägers aus einem optisch transmissiven Material,
- Aufbringen einer ersten Schicht aus einem elektrisch leitenden Polymer auf den Träger,
- optional Maskieren der ersten Schicht,
- Bestrahlen der ersten Schicht mit VUV-Strahlung unter Ausbilden mindestens eines elektrisch nicht leitenden Funktionsbereichs und mindestens eines elektrisch leitenden Funktionsbereichs, wobei
- die erste Schicht während dem Bestrahlen mindestens zeitweise gekühlt wird.

Vorzugsweise erfolgt das Kühlen über den gesamten Bestrahlungszeitraum.

Ebenfalls bevorzugt erfolgt das Ausbilden des mindestens einen elektrisch nicht leitenden Funktionsbereichs und des mindestens einen elektrisch leitenden Funktionsbereichs nur mit VUV-Strahlung. Mithin werden für das Ausbilden des mindestens einen elektrisch nicht leitenden Funktionsbereichs und des mindestens einen elektrisch leitenden Funktionsbereichs keine nasschemischen Verfahren eingesetzt.

Die vorstehend genannte Aufgaben werden gemäß einem zweiten Aspekt gelöst durch eine Sensorvorrichtung, aufweisend oder bestehend aus
- einen Träger aus einem optisch transmissiven Material,
- eine erste Schicht, die auf den Träger aufgebracht ist und mindestens einen elektrisch nicht leitenden Funktionsbereich mit einer ersten optischen Transmissivität und mindestens einen elektrisch leitenden Funktionsbereich mit einer zweiten optischen Transmissivität aufweist, wobei
- ein Verhältnis V der ersten optischen Transmissivität zu der zweiten optischen Transmissivität 0,95 ≤ V ≤ 1,05 ist.

Vorzugsweise handelt es sich bei der Sensorvorrichtung um eine Sensorfolie, vorzugsweise eine Touch-Folie.

Ebenfalls bevorzugt ist elementares Chlor und/oder eine Chlorverbindung in der ersten Schicht nicht enthalten. Mehr bevorzugt ist elementares Halogen und/oder eine Halogenverbindung in der ersten Schicht nicht enthalten.

Im Rahmen der vorliegenden Erfindung wurde gefunden, dass ein elektrisch leitendes Polymer, bspw. dotiertes PEDOT, insbesondere PEDOT:PSS oder PEDOT:TOS und Derivate davon, derart auf Vakuum Ultraviolett (VUV) Strahlung reagiert, dass die elektrische Leitfähigkeit des elektrisch leitentenden Polymers beim Beaufschlagen mit VUV-Strahlung sich soweit verringert, dass das Polymer elektrisch nicht leitend wird. Dabei ändern sich die optischen Eigenschaften des Polymers lediglich geringfügig, ggf. auch nicht, und sind für das bloße menschliche Auge nicht wahrnehmbar. Dies wird im Rahmen der vorliegenden Erfindung dadurch erreicht, dass während dem Beaufschlagen des elektrisch leitenden Polymers mit VUV-Strahlung ein Kühlen des Trägers zumindest zeitweise, vorzugsweise über die gesamte Bestrahlungsdauer, erfolgt.

Ohne durch eine Theorie gebunden sein zu wollen, wird angenommen, dass die Bestrahlung des elektrisch leitendenden Polymers mit VUV-Strahlung einerseits aufgrund der hohen photonischen Energie, die deutlich größer als die Bindungsenergie bspw. der C-C-Bindung ist, und andererseits aufgrund der Erhitzung des elektrisch leitenden Polymers zu dessen Degradation führen. Weiterhin wird angenommen, dass auch die bei der VUV-Bestrahlung entstehenden reaktiven Verbindungen und/oder reaktiven Spezies zur Degradation des elektrisch leitenden Polymers führen bzw. dazu beitragen.

Beim Bestrahlen des elektrisch leitendenden Polymers mit VUV-Licht kommt es zur Zerstörung der kovalenten Bindungen des elektrisch leitendenden Polymers und damit auch zur Zerstörung des konjugierten Systems. In Folge wird die Tunnelbarriere zwischen den elektrisch leitenden Bereichen größer, was wiederum den gesamten elektrischen Widerstand der Schicht erhöht.

Der elektrische Widerstand von PEDOT:PSS nimmt ebenfalls aufgrund thermischer Belastung ab, was auf die thermische Degradation zurückzuführen ist. Hierbei wird die Größe der elektrisch leitfähigen Bereiche aufgrund der thermischen Zersetzung reduziert, was dazu führt, dass die Distanz zwischen diesen Bereichen größer wird und schließlich die Tunnelbarriere für den Transport von Ladungsträgern sich erhöht. Dieses Phänomen wurde bereits mittels spektroskopischer Methoden untersucht (E. Vitoratos, Thermal degradation mechanisms of PEDOT:PSS, Organic Electronics 10 (2009) 61-66). Aus dieser Druckschrift geht weiterhin hervor, dass ionische Bindungen zwischen PEDOT und PSS während der Thermodegradation zerstört werden, was die elektrische Leitfähigkeit gleichermaßen verringert.

Die Veränderung der Transmissivitätseigenschaften des elektrisch leitenden Polymers wird somit durch die Degradation des elektrisch leitenden Polymers aber auch entstehende Abbau- und/oder Nebenprodukte bestimmt, so bspw. bei der Beaufschlagung von PEDOT:PSS mit VUV-Strahlung frei werdende Schwefelverbindungen.

Es wurde nunmehr gefunden, dass der thermischen Degradation während dem Beaufschlagen mit VUV-Strahlung durch zumindest zeitweise erfolgtes Kühlen des Trägers vollständig oder mindestens teilweise entgegengewirkt werden kann.

Mithin verläuft die Umwandlung des elektrisch leitenden Polymers in das elektrisch nicht leitende Polymer zeitlich verzögert ab, sofern das elektrisch leitende Polymer oder der Träger, auf dem das elektrisch leitende Polymer aufgebracht ist, zumindest zeitweise gekühlt wird. Vorzugsweise erfolgt die Kühlung über den gesamten Zeitraum einer Exposition des elektrisch leitenden Polymers mit VUV-Strahlung.

Ebenfalls bevorzugt erfolgt das Ausbilden des mindestens einen elektrisch nicht leitenden Funktionsbereichs und des mindestens einen elektrisch leitenden Funktionsbereichs nur mit VUV-Strahlung. Mithin werden für das Ausbilden des mindestens einen elektrisch nicht leitenden Funktionsbereichs und des mindestens einen elektrisch leitenden Funktionsbereichs keine nasschemischen Verfahren eingesetzt.

Ebenfalls bevorzugt ist elementares Chlor und/oder eine Chlorverbindung in der ersten Schicht nicht enthalten. So ist bspw. der Einsatz von Hypochlorit nicht umfasst. Mehr bevorzugt ist ein elementares Halogen und/oder eine Halogenverbindung in der ersten Schicht nicht enthalten. So ist bspw. der Einsatz eines Hypohalogenits nicht umfasst.

Ebenfalls bevorzugt ist, dass das Verfahren in Abwesenheit einer Säure und/oder säurehaltigen Lösung durchgeführt wird, wobei mehr bevorzugt die die Säure und/oder die säurehaltige Lösung einen pH ≤ 5, noch mehr bevorzugt ≤ 5,5, ≤ 6, oder ≤ 6,5.

Es ist davon auszugehen, dass die zeitlich verzögerte Umwandlung des elektrisch leitenden Polymers in das elektrisch nicht leitende Polymer umso effektiver ist, je geringer die Temperatur des Kühlungsmittels ist. Insofern sind Fluide, insbesondere Gase oder Gasgemische, bspw. Stickstoff oder Luft, einer Temperatur oberhalb des entsprechenden Siedepunkts/ Siedebereichs und bei bzw. unterhalb der Raumtemperatur (von 20°C bis 25°C), bevorzugt. Es hat sich ferner gezeigt, dass die Aufrechterhaltung eines Fluidflusses/Fluidstroms die zeitlich verzögerte Umwandlung weiter begünstig, da hierdurch eine Temperaturerhöhung des elektrisch leitenden Polymers besser vermieden werden kann.

Weiterhin wird angenommen, dass v.a. bei einem Umströmen des Trägermaterials mit einem Fluid, bspw. Stickstoff oder Luft, entstehende reaktive Verbindungen bzw. Spezies, bspw. Radikale, sofort abtransportiert werden.

Dadurch wird ermöglicht den mindestens einen elektrisch nicht leitenden Funktionsbereich mit einer optischen Transmissivität zu erhalten, die von der optischen Transmissivität des elektrisch leitenden Funktionsbereichs geringfügig oder gar nicht unterscheidet. So ist das Verhältnis V der optischen Transmissivität des elektrisch nicht leitenden Funktionsbereichs zu der optischen Transmissivität des elektrisch leitenden Funktionsbereichs 0,95 ≤ V ≤ 1,05.

Neben der vorstehend genannten nahezu identischen bzw. homogenen optischen Transmissivität des elektrisch nicht leitenden Funktionsbereichs und des elektrisch leitenden Funktionsbereichs, zeichnet sich die vorliegende Sensorvorrichtung dadurch aus, dass durch die Verwendung bspw. einer Maske aus einem VUV undurchlässigen Material und/oder eines gebündelten, bspw. punkförmigen, VUV-Strahls, Oberflächenbereiche der Schicht aus einem elektrisch leitenden Polymer hochselektiv, d.h. ortsgenau, bestrahlt werden können, so dass bspw. eine Vielzahl genau definierter kleiner Sensorfelder auf der Sensorvorrichtung erzeugt werden können. Weiterhin kann auf den Einsatz problematischer Flüssigkeiten, wie bspw. Ätzlösungen, verzichtet werden. Mithin weist die erfindungsgemäße Sensorvorrichtung einen einfachen Aufbau auf, der jedoch eine detaillierte Positionsauflösung sowohl in der Fläche als im Raum, d.h. bei übereinanderliegenden Schichten, ermöglicht.

Das Verfahren ist einfach ohne komplizierte und giftige Nasschemie durchführbar. Insbesondere kann auf die Verwendung ätzender Substanzen, bspw. eines Hypohalogenits, insbesondere Hypochlorit, verzichtet werden. Ferner wird insbesondere bei Einsatz eines Inkjet-Druckverfahren die Losgröße 1 ermöglicht und ökonomisch sinnvoll. Die erhaltenen Sensorvorrichtungen können problemlos verformt werden und damit bspw. an die Form von Bedienblenden angepasst werden.

Der mindestens eine elektrisch nicht leitende Funktionsbereich und der mindestens eine elektrisch leitende Funktionsbereich können auf verschiedene Arten ausgebildet werden. So kann die Strahlung auf einen bestimmten Oberflächenbereich der ersten Schicht gelenkt/ fokussiert werden, der geringere Ausmaße als der mindestens eine elektrisch nicht leitende Funktionsbereich aufweist. Mit anderen Worten können kleine, bspw. punktförmige, Oberflächenbereiche der ersten Schicht gezielt bestrahlt und nach einer ausreichenden Bestrahlungsdauer der Strahl auf einen weiteren Oberflächenbereich gelenkt werden. Alternativ oder zusätzlich kann eine Maske zwischen der ersten Schicht und der Strahlungsquelle angeordnet werden.

Es ist bevorzugt nach dem Aufbringen einer ersten Schicht aus einem elektrisch leitenden Polymer auf den Träger, eine Maske, bspw. eine Maskierungsschicht, auf die erste Schicht aufzubringen. Erst im Anschluss daran erfolgt das Bestrahlen der ersten Schicht mit VUV-Strahlung unter Ausbilden mindestens eines elektrisch nicht leitenden Funktionsbereichs und mindestens eines elektrisch leitenden Funktionsbereichs. An Oberflächenbereichen an denen das Ausbilden des mindestens einen elektrisch leitenden Funktionsbereichs erfolgen soll, ist die erste Schicht mit dem Material der Maske, bspw. der Maskierungsschicht, bedeckt. An Oberflächenbereichen an denen das Ausbilden des mindestens einen elektrisch nicht leitenden Funktionsbereichs erfolgen soll, ist die erste Schicht für die Strahlung derart zugänglich, dass die Umwandlung des elektrisch leitenden Polymers in das elektrisch nicht leitende Polymer stattfinden kann. Die Maske, bspw. die Maskierungsschicht, liegt vorzugsweise an den entsprechenden Oberflächenbereichen nicht vor. Anschließend kann die Maske, bspw. die Maskierungsschicht, entfernt werden. Das Aufbringen der Maske, bspw. einer Maskierungsschicht, auf die erste Schicht hat den Vorteil, dass eine beliebige VUV-Strahlungsquelle, vorzugsweise eine Xenon-Excimerlampe, eingesetzt werden kann.

Als Maske kann bspw. ein VUV undurchlässiger Inkjet-Lack, Siebdruck-Lack, oder eine strukturierte Folie, bspw. aus Kunststoff oder Metall, verwendet werden. Vorzugsweise wird ein optisch transparenter Inkjet-Lack mittels Inkjet-Druckverfahren in der gewünschten Strukturierung auf die Schicht aufgebracht und nach erfolgter VUV-Bestrahlung dort belassen. Alternativ wird ein - Inkjet-Lack mittels Inkjet-Druckverfahren in der gewünschten Strukturierung auf die Schicht aufgebracht und nach erfolgter VUV-Bestrahlung mit einem geeigneten Lösungsmittel, bspw. Wasser, entfernt.

Dem Fachmann ist klar, dass die Begriffe "elektrisch leitendes Polymer" bzw. "elektrisch nicht leitendes Polymer" nicht absolut zu verstehen sind, sondern vielmehr anzeigen, dass das elektrisch leitende Polymer einen lediglich geringen elektrischen Widerstand bereitstellt, der bei dem elektrisch nicht leitenden Polymer stark erhöht ist.

Vorzugsweise weist das elektrisch leitende Polymer hierbei einen Widerstand von ≤ 250 Ω/Square, vorzugsweise ≤ 225 Ω/Square, ≤ 200 Ω/Square, ≤ 175 Ω/Square, ≤ 150 Ω/Square, ≤ 125 Ω/Square, ≤ 100 Ω/Square, oder ≤ 75 Ω/Square auf. Der Widerstand des elektrisch nicht leitenden Polymer kann entsprechend den technischen Erfordernissen eingestellt werden und ist vorzugsweise ≥ 5^{∗}10⁵ Ω/Square, vorzugsweise ≥ 6^{∗}10⁵ Ω/Square, ≥ 7^{∗}10⁵ Ω/Square, ≥ 8^{∗}10⁵ Ω/Square, ≥ 9^{∗}10⁵ Ω/Square, ≥ 1^{∗}10⁶ Ω/Square, oder ≥ 1,5^{∗}10⁶ Ω.

Vorzugsweise wird die Bestrahlung mit VUV-Licht, insbesondere mit einer Xenon-Excimerlampe, für einen Zeitraum von 5 Min. bis 2 Std., vorzugsweise 8 Min. bis 1 Std., 10 Min. bis 30 Min., 12 Min. bis 20 Min., oder 14 Min. bis 18 Min. durchgeführt.

Beispielhafte und bevorzugte elektrisch leitendende Polymere sind PEDOT:PSS, PEDOT:TOS, Polyparaphenylen (PPP), Polypyrrol (PPy), dotiertes Polythiophen (PT) und Polyanilin (PANI), sowie Derivate der genannten Verbindungen. Geeignete Derivate weisen eine oder mehrere funktionelle Gruppen, bspw. eine Hydroxylgruppe, Aminogruppe, Halogengruppe, insbesondere F, Cl, Br, I, und/oder eine oder mehrere Methylgruppen, Ethylgruppen, und Propylgruppen, auf. Die Methylgruppe, Ethylgruppe, und Propylgruppe kann hierbei ebenfalls mit einer funktionellen Gruppe substituiert vorliegen. Besonders bevorzugt ist PANI oder ein PANI Derivat. Es ist klar, dass wenn, wie vorstehend erwähnt, eine Chlorverbindung bzw. eine Halogenverbindung in der ersten Schicht nicht enthalten ist, in diesem Fall auch ein verwendetes Derivat kein Cl bzw. Halogen aufweist.

Der Begriff "optische Transmissivität" betrifft sowohl optische Transparenz als auch optische Transluzenz. Vorzugsweise betrifft die optische Transmissivität die Transmissivität im sichtbaren Spektralbereich von etwa 380 nm bis etwa 780 nm, vorzugsweise in einem Bereich von 500 nm bis 600 nm, bspw. 510 nm bis 590 nm, 520 nm bis 580 nm, 530 nm bis 570 nm, oder etwa 550 nm, wie 540 nm bis 560 nm, also in einem für einen Betrachter wahrnehmbaren Bereich.

Vorzugsweise ist die Sensorvorrichtung aus dem vorliegenden Verfahren erhältlich.

Gemäß einer bevorzugten Ausführungsform der vorliegenden Erfindung weist der mindestens eine elektrisch nicht leitende Funktionsbereich eine erste optische Transmissivität auf und der mindestens eine elektrisch leitende Funktionsbereich eine zweite optische Transmissivität auf, wobei ein Verhältnis V der ersten optischen Transmissivität zu der zweiten optischen Transmissivität 0,95 ≤ V ≤ 1,05 ist.

Vorzugsweise ist 0,96 ≤ V ≤ 1,04, 0,965 ≤ V ≤ 1,03, 0,97 ≤ V ≤ 1,02, 0,975 ≤ V ≤ 1,01, 0,98 ≤ V ≤ 1,005, 0,985 ≤ V < 1, 0,990 ≤ V < 1, 0,991 ≤ V < 1, 0,992 ≤ V ≤ 0,999, 0,993 ≤ V ≤ 0,998, 0,994 ≤ V ≤ 0,997, oder 0,995 ≤ V ≤ 0,996.

Damit wird ermöglicht, dass mit dem bloßen menschlichen Auge keine Unterschiede, insbesondere Farbunterschiede, zwischen dem mindestens einen elektrisch nicht leitenden Funktionsbereich und dem mindestens einen elektrisch leitenden Funktionsbereich wahrzunehmen sind.

Die optische Transmissivität kann hierbei durch einfache Transmissivitätsmessung im sichtbaren Bereich, bspw. mittels herkömmlicher UV-VIS-Spektroskopie, insbesondere im Bereich von etwa 380 nm bis 780 nm, ermittelt werden. So weist bspw. PEDOT:PSS im leitfähigen Zustand eine hellblaue Färbung auf und bietet sich dem Betrachter als ein transparentes Material mit schwach bläulicher Färbung. Elektrisch nicht leitende Funktionsbereiche, die gemäß herkömmlichen Verfahren erhalten werden, erscheinen üblicherweise farblos transparent und unterscheiden sich daher von den elektrisch leitenden Funktionsbereichen durch den fehlenden blauen Anteil. Dieser Unterschied kann von dem Betrachter ohne weiteres wahrgenommen werden, wird als störend empfunden und kann bspw. bei Displays zu Fehleingaben führen.

Im Gegensatz hierzu wurde im Rahmen der vorliegenden Erfindung gefunden, dass durch das Erstellen elektrisch nicht leitender Funktionsbereiche durch die Anwendung von VUV-Licht unter gleichzeitiger Kühlung des Substrats, eine nahezu entsprechende bläuliche Färbung der elektrisch nicht leitenden Funktionsbereiche zu den elektrisch leitenden Funktionsbereichen erhalten wird, so dass ein Betrachter einen optischen Unterschied zwischen einem elektrisch leitenden Funktionsbereich in einem elektrisch nicht leitenden Funktionsbereich mit bloßem Auge nicht wahrnehmen kann.

Vorzugsweise handelt es sich bei der Sensorvorrichtung um eine Sensorfolie, vorzugsweise eine Touch-Folie. Eine derartige Folie kann beliebige Stärken annehmen, die vorzugsweise über das Herstellungsverfahren definiert werden.

Gemäß einer weiteren Ausführungsform der vorliegenden Erfindung weist die VUV-Strahlung eine Wellenlänge λ von 100 nm ≤ λ ≤ 200 nm, bspw. 150 nm ≤ λ ≤ 190 nm, 160 nm ≤ λ ≤ 180 nm, 170 nm ≤ λ ≤ 175 nm, mehr bevorzugt λ = 172 nm, auf.

VUV-Licht weist im Allgemeinen eine Wellenlänge von 10 nm ≤ λ ≤ 200 nm auf. Entsprechende UV-Strahlung kann durch Anlegen eines elektrischen Stromes an ein dielektrisches Gas, bspw. Xenon oder Lithium, erzeugt werden. Eine weitere Möglichkeit besteht in der Breitstellung laserinduzierter Plasmen oder im Synchrotron.

Beispielhafte VUV-Lichtquellen umfassen eine Niederdruckquecksilberlampe oder eine Xenon-Excimerlampe. Vorzugsweise wird Licht einer Wellenlänge λ = 172 nm mittels einer Xenon-Excimerlampe bereitgestellt.

Die VUV-Lichtquelle, insbesondere eine Xenon-Excimerlampe, ist vorzugsweise in einem Abstand von 5 mm - 10 cm, bspw. 6 mm - 5 cm, 7 mm - 2 cm, 8 mm - 1 cm, oder 8 mm bis 9 mm von dem Träger angeordnet. Es hat sich gezeigt, dass bei geringen Abständen von etwa 5 mm bis etwa 2 cm der VUV-Lichtquelle zum Träger auf die Erzeugung eines Vakuums zwischen VUV-Lichtquelle und Träger verzichtet werden kann und die Bestrahlung unter Normalbedingungen durchgeführt werden kann. Normalbedingungen betreffen hierbei eine Umgebungstemperatur von 20°C bis 25°C, bspw. 21°C bis 23°C, und einen Umgebungsdruck von 0,75 bar bis 1,10 bar, bspw. 0,92 bar bis 1,05 bar.

Gemäß einer weiteren Ausführungsform der vorliegenden Erfindung weist das mindestens zeitweise Kühlen der ersten Schicht ein Kontaktieren des Trägers mit einem Kühlmittel einer Temperatur von 250 K oder weniger auf.

Vorzugsweise weist das Kühlmittel eine Temperatur ≤ 200 K, ≤ 150 K, ≤ 140 K, ≤ 130 K, ≤ 120 K, ≤ 110 K, oder 77 bis 100 K auf.

Das Kühlmittel liegt vorzugsweise in Form eines Fluids, insbesondere Gases, vorzugsweise gasförmiger Stickstoff oder Luft, vor, dass den Träger und/oder die erste Schicht aus einem elektrisch leitenden Polymer umströmt. Insbesondere durch Umströmen der ersten Schicht mit dem Fluid kann ein Abtransport reaktiver Verbindungen und/oder reaktiver Spezies erreicht werden, wodurch eine Degradation des elektrisch leitenden Polymers durch Reaktion mit den reaktiven Verbindungen und/oder reaktiven Spezies vermieden wird.

Bei dem Kühlmittel kann es sich ebenfalls um einen Feststoff handeln, bspw. Trockeneis, oder ein Fluid, bspw. flüssige Luft oder flüssiger Stickstoff.

Bspw. kann bspw. eine zweite, unbeschichtete Seite des Trägers dem Kühlmittel ausgesetzt werden, wohingegen eine erste, mit der Schicht beschichtete Seite des Trägers der VUV-Strahlung ausgesetzt werden kann.

Zwischen der ersten Schicht und der Strahlungsquelle für die VUV-Strahlung kann ein Vakuum vorliegen. Das Vakuum kann hierzu einen Wert von 100 mbar oder weniger aufweisen Beispielsweise kann es sich um ein Feinvakuum von 1 mbar bis 10⁻³ mbar, oder einem Hochvakuum von 10⁻³ bis 10⁻⁷ mbar, oder weniger handeln.

Vorzugsweise wird der Träger, mehr bevorzugt die erste Schicht, mit gasförmigen Stickstoff oder einem Gasgemisch, dass 50 Vol.-% oder mehr, bspw. 60 Vol.-% oder mehr, 70 Vol.-% oder mehr, 80 Vol.-% oder mehr, 90 Vol.-% oder mehr, 95 Vol.-% oder mehr, oder 99,8 Vol.-% oder mehr, Stickstoff enthält, bspw. Luft, umströmt. VUV-Strahlung kann sich insbesondere in gasförmigen Stickstoff noch derart ausbreiten, dass einerseits die Ausbildung des mindestens einen elektrisch nicht leitenden Funktionsbereichs erfolgen und darüberhinaus die Kühlung der ersten Schicht bereitgestellt werden kann.

Die Verwendung von gasförmigen Stickstoff, bspw. in technischer Qualität mit 99,8 Vol.-% Stickstoff oder mehr, bei Raumtemperatur oder unterhalb davon als Kühlmittel ist bevorzugt.

Die zumindest zeitweise erfolgende Kühlung kann über die Temperatur und/oder die Strömungsgeschwindigkeit des Fluids, insbesondere des Stickstoffs oder des Gasgemischs, erreicht werden. So wurde gefunden, dass sogar Stickstoff bei Raumtemperatur, d.h. einer Temperatur von 20°C bis 25°C, verwendet werden kann, sofern die Strömungsgeschwindigkeit des Stickstoffs ausreichend hoch ist. Eine ausreichend hohe Strömungsgeschwindigkeit ist hierbei eine Strömungsgeschwindigkeit von 0,5 Liter/Min. oder mehr, bspw. 1,0 Liter/Min. oder mehr oder 5,0 Liter/Min. oder mehr. Niedrigere Temperaturen des gasförimigen Kühlmittels von 20°C oder weniger erfordern geringere Strömungsgeschwindigkeiten von bspw. < 0,5 Liter/Min.

Gemäß einer Ausführungsform der vorliegenden Erfindung wird mindestens ein Kontaktierungsbereich ausgebildet, wobei der mindestens eine Kontaktierungsbereich eine elektrisch leitfähige Kontaktierungsstruktur zur Kontaktierung des mindestens eines ersten elektrisch leitenden Funktionsbereiches ausbildet, vorzugsweise wobei die elektrisch leitfähige Kontaktierungsstruktur Silberteilchen aufweist.

Damit wird die elektrische Kontaktfähigkeit mit anderen elektrischen Komponenten bereitgestellt. Derartig kann bspw. der elektrische Kontakt der Sensorvorrichtung mit den weiteren Komponenten einer Bedienblende für ein Haushaltsgerät bereitgestellt werden.

Gemäß einer weiteren Ausführungsform der vorliegenden Erfindung wird ein Aufbringen der ersten Schicht mit einem Inkjet-Druckverfahren oder Siebdruckverfahren durchgeführt.

Derartige Druckverfahren sind im Stand der Technik bekannt und ermöglichen ein positionsgenaues Aufbringen einer Schicht. Hierbei kann es sich sowohl um eine erste Schicht aus mindestens einem elektrischen leitenden Polymer als auch um eine weitere Schicht, bspw. eine Schutzschicht und/oder eine Deckschicht, handeln.

Inkjet-Druckverfahren oder Siebdruckverfahren können gleichermaßen für die Erstellung beliebiger anderer Schichten herangezogen werden. Bspw. kann eine Maske, eine Schutzschicht oder eine Deckschicht entsprechend erzeugt werden. Vorzugsweise, wird der gesamte Schichtaufbau mit einem Verfahren, bspw. Inkjet-Druckverfahren oder Siebdruckverfahren, realisiert. Dadurch können die Produktionsabläufe weiter vereinfacht werden.

Wie bereits erwähnt, besteht der Vorteil des Inkjet-Druckverfahrens oder Siebdruckverfahrens in der ortsgenauen Positionierung und hohen Auflösung, bspw. 118 Pixel pro Zentimeter oder mehr, vorzugsweise 236 Pixel pro Zentimeter oder mehr, wie 473 Pixel pro Zentimeter oder mehr. Mithin kann durch den Einsatz der genannten Druckverfahren auch der Materialverbrauch für die jeweilige Beschichtung verringert werden.

Vorzugsweise wird die mindestens eine weitere Schicht aus einem optisch transmissiven Material auf den elektrisch leitenden Funktionsbereich und/oder elektrisch nicht leitenden Funktionsbereich aufgebracht.

Mehr bevorzugt ist die mindestens eine weitere Schicht eine Schutzschicht und/oder eine Deckschicht.

Die Schutzschicht wird bspw. eingesetzt um den elektrisch leitenden Funktionsbereich gegenüber Licht zu schützen und wird daher vorzugsweise lediglich auf diesen aufgetragen. Alternativ oder zusätzlich kann die Schutzschicht verwendet werden um eine elektrische Isolierung oder einen elektrischen Kontakt mit einem elektrisch leitenden Funktionsbereich einer darüber liegenden Schicht zu ermöglichen. Es ist klar, dass zur Ermöglichung des elektrischen Kontakts die Schutzschicht entweder als solche elektrisch leitend ist oder in diese positionsgenau elektrisch leitendes Material, bspw. elektrisch leitende Partikel, vorliegen.

Die Deckschicht hingegen kann sowohl auf den elektrisch leitenden Funktionsbereich als auch den elektrisch nicht leitenden Funktionsbereich aufgetragen werden.

Bei der Deckschicht kann es sich um eine Haftvermittlerschicht für ein Hinterspritzen der Sensorvorrichtung handeln, diese wird großflächig auf die Sensorvorrichtung gedruckt.

Gemäß einer weiteren Ausführungsform der vorliegenden Erfindung weist die der elektrisch leitende Funktionsbereich eine elektrisch leitfähige Komponente auf, wobei die elektrisch leitfähige Komponente Carbon Nanotubes, Nanodrähte aus Silber oder eine Mischung davon aufweist.

Auch in die Schutzschicht können elektrisch leitfähige Komponenten derart aufgenommen werden, dass ein dreidimensionaler Aufbau aus elektrisch nicht leitenden Funktionsbereichen und elektrisch leitenden Funktionsbereichen bereitgestellt wird. So kann bspw. eine erste Schicht auf dem Trägermaterial ein bestimmtes Muster aus einem elektrisch nicht leitenden und einem elektrisch leitenden Funktionsbereich bereitgestellt werden, der elektrisch leitende Funktionsbereich anschließend mit einer elektrisch leitfähigen Komponente zum Schutz versehen werden, und darüber eine weitere erste Schicht aus einem elektrisch nicht leitenden Funktionsbereich und einem elektrisch leitenden Funktionsbereich erstellt worden. Die elektrisch leitfähige Komponente in der Schutzschicht kann dabei eine elektrische Verbindung zwischen den Schichten, d.h. senkrecht zu dem Träger, bereitstellen.

Mithin ist es möglich beliebige dreidimensionale Sensorvorrichtungen mit positionsgenauen leitfähigen Strukturen nicht nur in der Ebene, d.h. in der auf dem Träger aufgebrachten Schicht, sondern auch senkrecht dazu, zu erzeugen.

Vorzugsweise bedeckt die Deckschicht den elektrisch nicht leitenden Funktionsbereich und den elektrisch leitenden Funktionsbereich.

Die Deckschicht kann bspw. aus dem gleichen Material wie der Träger hergestellt werden.

Gemäß einer weiteren Ausführungsform der vorliegenden Erfindung ist ein Verhältnis des elektrisch leitfähigen Polymers zu dem nicht leitfähigen Polymer in einem Bereich von 90:10 bis 20:80, vorzugsweise 75:35 bis 85:15, mehr bevorzugt 80:20.

Vorzugsweise ist der Träger und/oder die Deckschicht ein Polymer, vorzugsweise ist das Polymer ein Polycarbonat (PC), Polyethylenterephthalat (PET) oder Polymethylmethacrylat (PMMA), bzw. eine Mischung davon.

Derartige Materialien sind einfach zu handhaben, herzustellen und weisen ferner eine ausreichende optische Transmissivität auf.

Vorzugsweise ist die Sensorvorrichtung als eine kapazitive Sensorvorrichtung ausgebildet.

Damit kann die Sensorvorrichtung als Schaltelement, insbesondere für ein Display, insbesondere einen Touchscreen, bspw. ein projiziert kapazitiver Touchscreen (PCT) oder ein Oberflächen- kapazitiver Touchscreen (OCT), welches bei Annäherung und/oder Berührung durch ein Objekt, bspw. eines Fingers, ein elektrisches Signal erzeugen kann.

Derartige berührungsempfindliche Sensorvorrichtungen können bspw. als Bedienblende zur Steuerung von Haushaltsgeräten, Maschinen und Anlagen, bei Elektrokleingeräten wie Computern, Telefonen und ähnlichem verwendet werden. Im Gegensatz zu mechanischen Druckschaltern sind berührungsempfindliche Sensorvorrichtungen weniger abnutzungsanfällig, leicht zu reinigen und werden von Benutzern als ästhetisch ansprechend empfunden.

Derartige Sensorvorrichtungen, die Herstellung derselben, sowie deren Aufnahme in eine Bedienblende sind dem Fachmann bekannt und können bspw. der DE 201 19 700 U1, DE 10 2012 201 600 A1, oder DE 10 2007 020 592 A1 entnommen werden.

Vorzugsweise ist die kapazitive Sensorvorrichtung über ein Self-Capacity-Messverfahren auswertbar.

Vorzugsweise kann die Sensorvorrichtung auf einen weiteren Träger mittels eines In-Mould-Labeling (IML) Verfahrens oder eines Laminierverfahrens, bspw. einem LOCA oder OCA Laminierverfahren, insbesondere durch ein OCA Laminierverfahren, aufgebracht werden.

Vorzugsweise ist die Sensorvorrichtung in mindestens einem Teilbereich thermoverformbar.

Durch die Thermoverformbarkeit der Sensorvorrichtung, insbesondere einer Sensorfolie, kann eine nachträgliche Formgebung der Sensorvorrichtung erfolgen, so dass bspw. eine Krümmung der Sensorvorrichtung entsprechend einer Bedienblende oder einem sonstigen Bestandteil eines Geräts erreicht werden kann.

Derartig erzeugte Sensorvorrichtungen, insbesondere Sensorfolien, können nach der Strukturierung, bspw. durch Thermoforming oder High-Pressure-Forming, verformt werden. Die Folie wird flach oder verformt in einem geeigneten Prozess, bspw. Kunststoffspritzguss, mit Kunststoff (vorzugsweise transparent) überspritzt. So wird ein stabiles Bauteil für den Einbau in Geräte, bspw. Haushaltsgeräte, erhalten.

Gemäß einer weiteren Ausführungsform der vorliegenden Erfindung wird eine Bedienblende für ein Haushaltsgerät bereitgestellt, wobei die Bedienblende die erfindungsgemäße Sensorvorrichtung aufweist. Die Bedienblende kann ein Display aufweisen, beispielsweise ein TFT, LCD, OLED oder eine Sieben Segment-Anzeige bestehend aus einzelnen LED's. Wobei die Touch-Folie das Display bzw. die LED's ansteuert.

Gemäß noch einer weiteren bevorzugten Ausführungsform der vorliegenden Erfindung wird ein Haushaltsgerät bereitgestellt, das die vorstehend genannte Bedienblende aufweist.

Vorzugsweise kann eine Sensorvorrichtung durch das erfindungsgemäße Verfahren erhalten werden.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Die Erfindung wird in dem nachstehend aufgeführten Beispiel und in den Zeichnungen näher erläutert, wobei die
- Fig. 1: eine Schrägsicht einer Ausführungsform der erfindungsgemäße Sensorvorrichtung darstellt;
- Fig. 2: eine Seitenansicht einer Ausführungsform der erfindungsgemäße Sensorvorrichtung darstellt; und
- Fig. 3a und 3b: den elektrischen Widerstand bzw. die Transmissivität einer PEDOT:PSS-Schicht auf einem Polycarbonat-Träger in Abhängigkeit von der Belichtungszeit mit VUV-Strahlung zeigen.

### Beispiel 1

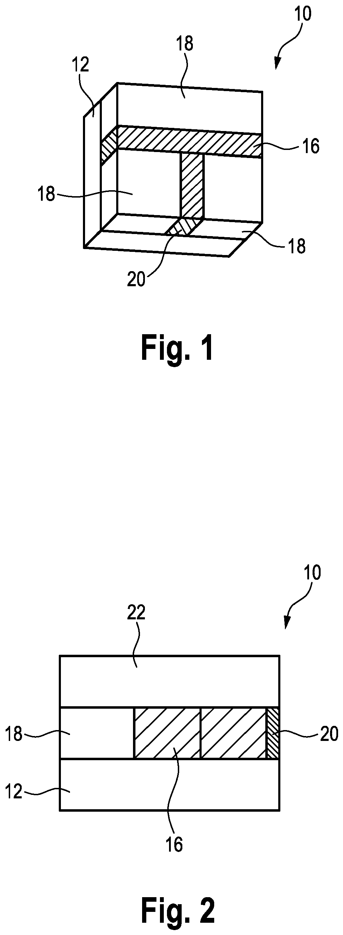

Die Fig. 1 zeigt eine erfindungsgemäße Sensorvorrichtung 10. Eine Oberfläche eines Träger 12 aus Polycarbonat wird in Gänze mit ein Schicht 14 aus PEDOT:PSS versehen oder mit Siebdruck oder Inkjet-Druckverfahren mit PEDOT:PSS in gewünschter Fläche bedruckt. Die erforderliche Ankontaktierung 20, mithin Leiterzüge, die zum Stecker führen, werden aus leitfähigem Silber mittels Siebdruck oder Inkjet-Druckverfahren gedruckt. Anschließend wird eine Maske (nicht gezeigt) auf die zu erhaltenden elektrisch leitfähigen Funktionsbereiche 16 gedruckt. Bei dieser Maske handelt es sich um ein Material, das gegenüber VUV-Strahlung widerstandsfähig ist, aber ohne weiteres, bspw. durch ein Lösungsmittel, entfernt werden kann. Alternativ kann auch eine Maske in Form eines VUVundurchlässigen Materials, bspw. eine Metallfolie, auf die später elektrisch leitfähigen Funktionsbereiche 16 aufgelegt werden.

Durch die anschließende Belichtung mit VUV einer Xenon-Excimerlampe in einem Abstand von der Lampe zu dem Träger von etwa 5 mm bis 1 cm unter gleichzeitiger Kühlung des Trägers mit Stickstoff, werden die nicht maskierten Bereiche in elektrisch nicht leitende Bereiche 18 geändert. Nach abgeschlossener VUV-Bestrahlung wird die Maske entfernt. Die somit erhaltene Sensorvorrichtung 10 weist somit einen Träger 12 auf, der elektrisch nicht leitende Bereiche 18 und einen elektrisch leitenden Bereich 16 aufweist, wobei letzterer mit elektrischen Kontakten 20 versehen ist.

### Beispiel 2

In der Fig. 2 wird eine ähnliche Sensorvorrichtung 10 gezeigt, wobei in dieser eine Schicht 14 aus einem elektrisch leitenden Funktionsbereich 16, der mit einem Kontakt 20 versehen ist, und einem elektrisch nicht leitenden Funktionsbereich 18 zwischen einem Träger 12 und einer Deckschicht 22 aufgenommen ist. Die Herstellung der Sensorvorrichtung 10 erfolgt wie in Beispiel 1 beschrieben, wobei jedoch nach der Entfernung der Maske die Deckschicht 22 aus Polycarbonat auf die Schicht 14 aufgebracht wird.

Derartig erzeugte Folien können nach der Strukturierung, bspw. durch Thermoforming oder High-Pressure-Forming, verformt werden. Die Folie wird flach oder verformt in einem geeigneten Prozess, bspw. Kunststoffspritzguss, mit Kunststoff (vorzugsweise transparent) überspritzt. So wird ein stabiles Bauteil für den Einbau in ein Gerät, bspw. ein Haushaltsgerät, erhalten.

### Beispiel 3

Die Herstellung einer zwei-lagigen Sensorstruktur erfolgt wie in Beispiel 1. Nach Aufbringen eines optisch transmissiven Lacks über die gesamte Sensorfläche erfolgt ein erneutes Aufbringen von PEDOT:PSS und der wiederholte Ablauf, wie in Beispiel 1 beschrieben. Sofern das Substrat, bspw. eine Folie, zu Beginn auf beiden Seiten mit PEDOT:PSS beschichtet wird, kann die Herstellung wie unter Beispiel 1 beschrieben, für jede Seite erfolgen. Die Ankontaktierung kann dann in einem Steckerbereich beidseitig erfolgen oder durch Durchkontaktierung in der Folie auf einer Seite durchgeführt werden.

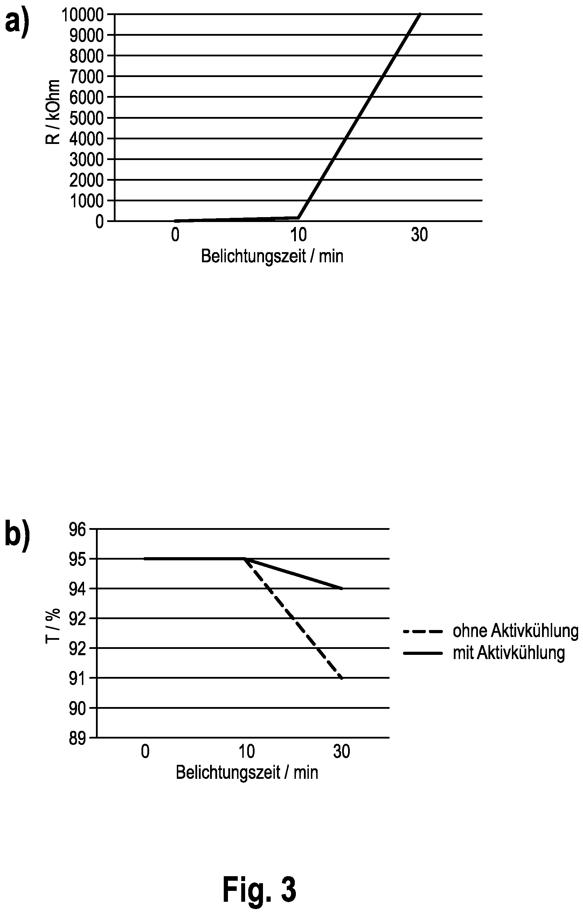

Die Fig. 3a zeigt den Widerstand der PEDOT:PSS-Schicht auf Polycarbonat in Abhängigkeit von der Belichtungszeit mit VUV-Strahlung einer Wellenlänge von 172 nm mit und ohne Kühlung. Die Fig. 3b zeigt die Transmissivität der PEDOT:PSS-Schicht auf Polycarbonat in Abhängigkeit von der Belichtungszeit mit VUV-Strahlung einer Wellenlänge von 172 nm mit und ohne Kühlung mit Luft.

Wie insbesondere der Fig. 3b hierbei entnommen werden kann, setzt ab einer Belichtungszeit von etwa 10 min eine verstärkte Degradation von PEDOT:PSS und mithin eine gleichzeitig erfolgende verstärkte Zunahme des elektrischen Widerstands, ein. Es ist ersichtlich, dass die Kühlung des Trägers 12, mit bspw. Stickstoff, eine deutlich geringere zeitliche Verringerung der Transmissivität als ohne Kühlung hervorruft und somit die Erzeugung homogener Elektroden ermöglicht. Mithin kann der elektrische Widerstand in einem entsprechenden Funktionsbereich deutlich erhöht werden, bspw. von 100 kΩ/Square oder weniger auf etwa 5.000 kΩ/Square nach 15 min, wobei innerhalb dieses Funktionsbereichs lediglich eine Abnahme der Transmissivität von etwa 95,0 auf etwa 94,5 im Vergleich zur Abnahme einer Transmissivität von etwa 95,0 auf etwa 93,0, ohne Kühlung, erfolgt.

Die vorstehende genannte geringere zeitliche Verringerung der Transmissivität bei Kühlung kann daher genutzt werden um Bereiche mit einer gewünschten elektrischen Leitfähigkeit bzw. gewünschten elektrischen Widerstand zu erhalten indem die Expositionsdauer gegenüber der VUV-Strahlungsquelle bzw. die Strahlungsdosis verändert wird. Mithin können im Rahmen der vorliegenden Erfindung Sensorvorrichtungen erzeugt werden, in denen die elektrisch leitenden Funktionsbereiche eine voneinander unterschiedliche elektrische Leitfähigkeit aufweisen. Dies kann bspw. genutzt werden um Sensorvorrichtungen herzustellen, deren Berührungsempfindlichkeit in Abhängigkeit von der Position auf der Sensorvorrichtung variiert.

## Patentansprüche

1. Verfahren zur Herstellung einer Sensorvorrichtung (10) aufweisend oder bestehend aus
Bereitstellen eines Trägers (12) aus einem optisch transmissiven Material, Aufbringen einer ersten Schicht (14) aus einem elektrisch leitenden Polymer auf den Träger,
Bestrahlen der ersten Schicht (14) mit VUV-Strahlung unter Ausbilden mindestens eines elektrisch nicht leitenden Funktionsbereichs (16) und mindestens eines elektrisch leitenden Funktionsbereichs (18), **dadurch gekennzeichnet, dass**
die erste Schicht während dem Bestrahlen mindestens zeitweise gekühlt wird.

2. Verfahren nach Anspruch 1, der mindestens eine elektrisch nicht leitende Funktionsbereich (16) eine erste optische Transmissivität aufweist und der mindestens eine elektrisch leitende Funktionsbereich (18) eine zweite optische Transmissivität aufweist, wobei ein Verhältnis V der ersten optischen Transmissivität zu der zweiten optischen Transmissivität 0,95 ≤ V ≤ 1,05 ist.

3. Verfahren nach einem der vorstehenden Ansprüche, wobei die VUV-Strahlung eine Wellenlänge λ von 100 nm ≤ λ ≤ 200 nm, bspw. 150 nm ≤ λ ≤ 190 nm, 160 nm ≤ λ ≤ 180 nm, 170 nm ≤ λ ≤ 175nm, mehr bevorzugt λ = 172 nm, auf.

4. Verfahren nach einem der vorstehenden Ansprüche, wobei das mindestens zeitweise Kühlen der ersten Schicht ein Kontaktieren des Trägers mit einem Kühlmittel einer Temperatur von 250 K oder weniger aufweist, vorzugsweise wobei das Kühlmittel Luft oder Stickstoff ist.

5. Verfahren nach einem der vorstehenden Ansprüche, aufweisend Ausbilden mindestens eines Kontaktierungsbereichs (20), wobei der mindestens eine Kontaktierungsbereich (20) eine elektrisch leitfähige Kontaktierungsstruktur zur Kontaktierung des mindestens eines elektrisch leitenden Funktionsbereiches (18) ausbildet, vorzugsweise wobei die elektrisch leitfähige Kontaktierungsstruktur Silberteilchen aufweist.

6. Verfahren nach einem der vorstehenden Ansprüche, wobei ein Aufbringen der ersten Schicht mit einem Inkjet-Druckverfahren oder Siebdruckverfahren durchgeführt wird.

7. Verfahren nach einem der vorstehenden Ansprüche, aufweisend Aufbringen mindestens einer weiteren Schicht (22) aus einem optisch transmissiven Material auf den elektrisch leitenden Funktionsbereich und/oder elektrisch nicht leitenden Funktionsbereich, vorzugsweise wobei die mindestens eine weitere Schicht (22) eine Schutzschicht und/oder eine Deckschicht ist, mehr bevorzugt wobei die Deckschicht den elektrisch nicht leitenden Funktionsbereich (16) und den elektrisch leitenden Funktionsbereich (20) bedeckt.

8. Verfahren nach einem der vorstehenden Ansprüche, wobei der elektrisch leitende Funktionsbereich (18) eine elektrisch leitfähige Komponente aufweist, wobei die elektrisch leitfähige Komponente Carbon Nanotubes, Nanodrähte aus Silber oder eine Mischung davon aufweist.

9. Sensorvorrichtung (10), insbesondere Touch-Folie, aufweisend oder bestehend aus
einem Träger (12) aus einem optisch transmissiven Material,
einer ersten Schicht (14), die auf den Träger (12) aufgebracht ist und mindestens einen elektrisch nicht leitenden Funktionsbereich (16) mit einer ersten optischen Transmissivität und mindestens eine elektrisch leitenden Funktionsbereich (18) mit einer zweiten optischen Transmissivität aufweist, **dadurch gekennzeichnet, dass** ein Verhältnis V der ersten optischen Transmissivität zu der zweiten optischen Transmissivität 0,95 ≤ V ≤ 1,05 ist.

10. Sensorvorrichtung (10) nach Anspruch 9, aufweisend mindestens einen Kontaktierungsbereich (20), wobei der mindestens eine Kontaktierungsbereich (20) eine elektrisch leitfähige Kontaktierungsstruktur zur Kontaktierung des mindestens einen elektrisch leitenden Funktionsbereiches ausbildet, vorzugsweise wobei die elektrisch leitfähige Kontaktierungsstruktur Silberteilchen aufweist.

11. Sensorvorrichtung (10) nach einem der Ansprüche 9 oder 10, aufweisend mindestens eine weitere Schicht (22) auf dem elektrisch leitenden Funktionsbereich, vorzugsweise wobei die mindestens eine weitere Schicht eine Schutzschicht und/oder eine Deckschicht ist.

12. Sensorvorrichtung (10) nach einem der Ansprüche 9 bis 11, wobei der Träger (12) ein Polymer ist, vorzugsweise wobei das Polymer ein PC, PET oder PMMA ist.

13. Sensorvorrichtung (10) nach einem der Ansprüche 9 bis 12, wobei die Sensorvorrichtung (10) als eine kapazitive Sensorvorrichtung ausgebildet ist.

14. Bedienblende für ein Haushaltsgerät, wobei die Bedienblende die Sensorvorrichtung (10) nach einem der Ansprüche 9 bis 13 aufweist.

15. Haushaltsgerät, das die Bedienblende nach Anspruch 14 aufweist.
